# EUROPEAN PATENT APPLICATION

(11) **EP 3 446 825 A1**
(43) Date of publication of application: **27.02.2019**
(21) Application number: 18189645.7
(22) Date of filing: 20.08.2018
(51) Int. Cl.: B23K 26/08, B23K 26/14, B23K 26/34, B23K 26/144

(54) **LASER CLADDING DEVICE AND COMPLEX MACHINE TOOL**

(30) Priority: 23.08.2017 JP 2017160380
(71) Applicant: Nakamura-Tome Precision Industry Co., Ltd., Ishikawa 920-2195 (JP)
(72) Inventor: KAMIGAWARA, Atsushi, Hakusan, Ishikawa 920-2195 (JP); MASUKO, Naoto, Hakusan, Ishikawa 920-2195 (JP)
(74) Representative: Wunderlich & Heim Patentanwälte Partnerschaftsgesellschaft mbB

(57) **Abstract**

A laser cladding device includes: an irradiation unit (L) configured to irradiate a base material (1) with a laser beam (11); a supply unit (P) configured to supply cladding powder (12) to the base material (1); and a movement unit (140) configured to move the irradiation unit (L) and the supply unit (P) relative to the base material (1), and clads the surface of the base material (1) along a cladding advancement direction (Z, Y). A supply center position (12a) on the base material (1) to which the supply unit (P) supplies the cladding powder (12) is offset by a predetermined distance (d) to rearward of an optical axis (11a) of the laser beam (11) in the cladding advancement direction (Z, Y).

## Description

### BACKGROUND

The present invention relates to a laser cladding device for cladding by welding on a base material by using a laser beam and a complex machine tool using the same.

There has been examined a laser cladding method for cladding the surface of a base material by a laser beam with powder made of a material identical to or different from the base material.

Using a laser beam for heat input has advantages that the amount of heat input can be reduced and the dilution rate of the base metal can be lowered.

The laser cladding method also has characteristics that the thickness of a clad layer can be easily adjusted and the clad surface is smooth.

A conventional laser cladding device as disclosed in JP-A-2012-192436, for example, is based on the premise that cladding powder is supplied coaxially with the optical axis of a laser beam.

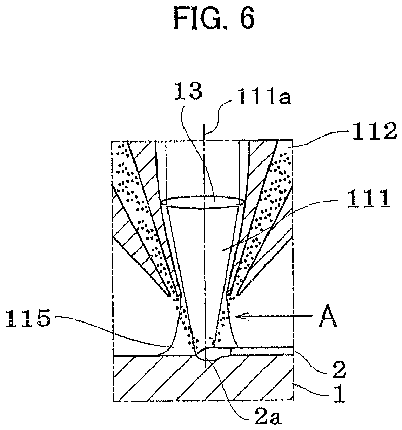

FIG. 6 illustrates schematically the structure of the conventional laser cladding device.

The surface of a base material 1 is irradiated with a laser beam 111 converged by an optical lens 13 or the like, and cladding powder 112 is ejected and supplied on the optical axis of the laser beam 111.

The surroundings of the cladding site are protected by a shield gas 115.

The surface of the base material 1 is heated to a high temperature by the laser beam 111 to form a melt layer 2a of the powder. The melt layer 2a is cooled to form a clad layer 2.

In laser cladding, the laser beam is moved in the direction of arrow A in FIG. 6 to form the clad layer 2 in sequence on the surface of the base material 1 along a cladding advancement direction Z.

However, it is difficult to form an optimum melt layer by the conventional method of which further improvement is desired.

### SUMMARY

An object of the present invention is to provide a laser cladding device that forms a clad layer of favorable quality with a high degree of efficiency and a complex machine tool.

According to one aspect of the invention, there is provided a laser cladding device for cladding a surface of a base material along a cladding advancement direction, comprising:
an irradiation unit configured to irradiate the base material with a laser beam;
a supply unit configured to supply cladding powder to the base material; and
a movement unit configured to move the irradiation unit and the supply unit relative to the base material, characterized in that
a supply center position on the base material to which the supply unit supplies the cladding powder is offset by a predetermined distance to rearward of an optical axis of the laser beam in the cladding advancement direction.

There is a time difference between the irradiation of a laser beam and the instant when the base material reaches a high temperature suitable for formation of an optimum melt layer. According to the conventional technique by which cladding powder is supplied on the optical axis of a laser beam, the base material does not reach a high temperature suitable for formation of the optimum melt layer in the position where the cladding powder is supplied.

In one aspect of the present invention, the supply center position on the base material to which the cladding powder is supplied by the supply unit is offset by the predetermined distance to the rearward of the optical axis of the laser beam along the cladding advancement direction. This allows the base material to reach the high temperature suitable for formation of the optimum melt layer in the position where the cladding powder is supplied.

One of the above laser cladding devices may further comprise a processing head equipped with the irradiation unit and the supply unit,
wherein the supply unit arranged in the processing head may include an annular supply tube that is provided annularly around the optical axis of the laser beam to supply the cladding powder, and
wherein the annular supply tube may be asymmetrical to the optical axis of the laser beam in a longitudinal cross section parallel to the optical axis of the laser beam.

In this aspect, the annular supply tube is asymmetrical to the optical axis of the laser beam with respect to the longitudinal cross section parallel to the optical axis of the laser beam, which is clearly distinguished from the conventional technique by which the annular supply tube is symmetrical to the optical axis of the laser beam.

One of the above laser cladding devices may further comprise a processing head equipped with the irradiation unit and the supply unit,
wherein the supply unit arranged in the processing head may include an annular supply tube that is provided annularly around the optical axis of the laser beam to supply the cladding powder, and
wherein a center of outline of the annular supply tube may not align with the optical axis of the laser beam in a transverse cross section orthogonal to the optical axis of the laser beam.

In this aspect, the center of the outline of the annular supply tube does not align with the optical axis of the laser beam in the transverse plane orthogonal to the optical axis of the laser beam, which is clearly distinguished from the conventional technique by which the center of the outline of the annular supply tube aligns with the optical axis of the laser beam.

One of the above laser cladding devices may further comprise a processing head equipped with the irradiation unit and the supply unit,
wherein the movement unit may move the processing head with respect to the base material, and
wherein the movement unit may further include:
a direction variable control unit configured to control variably the cladding advancement direction by changing a movement direction of the processing head; and
a swiveling unit configured to swivel the processing head around a perpendicular line to the surface of the base material in accordance with the cladding advancement direction.

In this aspect, in the case of continuously cladding the surface of the base material, the cladding advancement direction can be changed by the direction change unit. In addition, the swiveling unit allows the processing head to swivel around the perpendicular line to the surface of the base material in accordance with the cladding advancement direction. This allows the supply axis of the cladding powder to align with the rearward of the cladding advancement direction of the optical axis.

One of the above laser cladding devices may further comprise an offset variable control unit configured to change the offset amount.

The offset variable control unit may switch the nozzle to be used when the supply unit has the plurality of nozzles different in ejection angle. Alternatively, the offset variable control unit may change the orientation of the ejection tube of the powder as the supply unit.

According to another aspect of the invention, there is provided a complex machine tool that may comprise the laser cladding device as referred to the above.

In another aspect of the present invention, the cladding powder is supplied in the state where the surface of the base material reaches the optimum temperature by irradiation of the laser beam. This makes it possible to provide a complex machine tool that forms a high-quality clad layer from a favorable melt layer.

### BRIEF DESCRIPTION OF THE DRAWINGS

FIG. 1 is a diagram schematically illustrating a laser cladding method as an embodiment of the present invention.
FIG. 2 illustrates a structure example of a tip of a processing head in a laser cladding device as an embodiment of the present invention.
FIG. 3A is a cross-sectional view of FIG. 2 taken along line A-A, and FIG. 3B is a cross-sectional view of FIG. 2 taken along line B-B.
FIGS. 4A and 4B are diagrams illustrating laser processing heads different in cladding advancement direction.
FIG. 5 is a block diagram of the laser cladding device.
FIG. 6 is a diagram illustrating a conventional laser cladding method.

### DESCRIPTION OF EXEMPLARY EMBODIMENTS

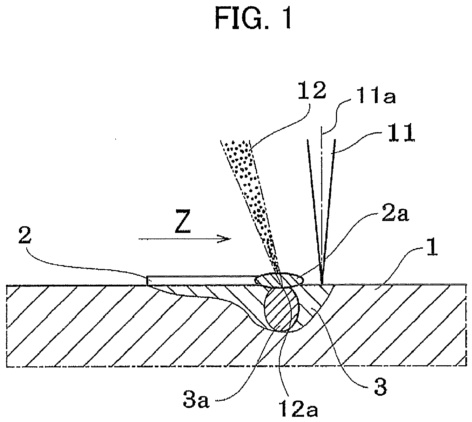

A laser cladding method according to an exemplary embodiment of the present invention will be described with reference to FIG. 1.

In laser cladding, the surface section of a base material 1 is irradiated with a laser beam 11, and cladding powder 12 is supplied to the surface section. At this time, an optical axis 11a of the laser beam 11 and a supply center position 12a of the cladding powder 12 are moved relative to the base material 1 in a cladding advancement direction Z. In the present exemplary embodiment, the optical axis 11a of the laser beam 11 and the supply center position 12a of the cladding powder 12 are moved relative to the base material 1 in the cladding advancement direction Z. Alternatively, the base material 1 may be moved in the direction opposite to the arrow Z.

At that time, the surface section of the base material 1 reaches the optimum high temperature for melting of the cladding powder 12 with a little time lag behind the laser irradiation.

Accordingly, the optical axis 11a of the laser beam 11 and the supply center position 12a of the cladding powder 12 on the base material 1 are offset so that the cladding powder 12 is ejected to the rearward of the advancement direction (cladding advancement direction) Z of the laser beam 11 with respect to the optical axis 11a of the laser beam 11. That is, the supply center position 12a of the cladding powder 12 is set to the rearward of the optical axis 11a of the laser beam 11 in the cladding advancement direction Z.

FIG. 1 illustrates temperature distributions 3 and 3a caused by heating the base material 1 with laser. As described above, in a high-temperature area 3 of the base material 1, a high-temperature area 3a optimum for melting of the cladding powder 12 is generated in the cladding advancement direction Z with a little time lag behind the laser irradiation. In the present embodiment, the cladding powder 12 is ejected according to the high-temperature area 3a. The melt layer 2a of the cladding powder 12 is formed in the high-temperature area 3a, and the clad layer 2 is formed in sequence to rearward of the cladding advancement direction Z.

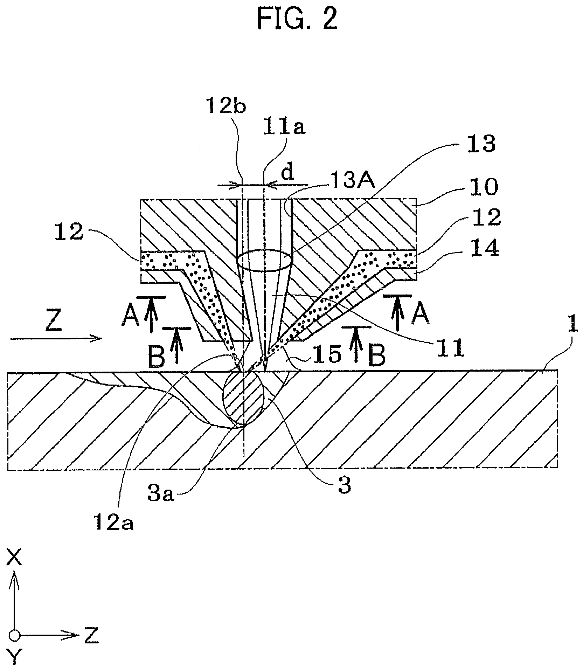

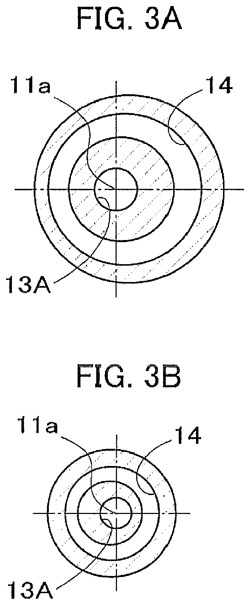

FIG. 2 illustrates a structure example of a tip of a laser processing head 10 for use in the laser cladding device configured on the foregoing principles, and FIG. 3A illustrates the overview of the laser processing head 10. As illustrated in FIG. 3A, the laser processing head 10 is equipped with an irradiation unit L of the laser beam 11 and a supply unit P of the cladding powder 12. In FIG. 2, three orthogonal axes X, Y, and Z are defined as movement directions of a complex machine tool.

As illustrated in FIG. 2, the irradiation unit L of the laser beam 11 has a light collection unit, for example, an optical lens 13 in a laser path 13A provided at the tip of the laser processing head 10. The irradiation unit L of the laser beam 11 collects laser light by the optical lens 13 and irradiates the surface of the base material 1 with the laser beam 11.

The supply unit P of the cladding powder 12 offsets the supply center position 12a on the base material 1 to which the cladding powder 12 is supplied, by a predetermined distance to rearward of the optical axis 11a of the laser beam 11 in the cladding advancement direction Z.

The supply unit P of the cladding powder 12 can have an annular supply tube 14, for example, that is provided annularly around the optical axis 11a of the laser beam 11 to supply the cladding powder 12.

In this case, the annular supply tube 14 is asymmetrical to the optical axis 11a of the laser beam 11 in a longitudinal cross section parallel to the optical axis 11a of the laser beam 11 as illustrated in FIG. 2. Accordingly, the supply center position 12a on the base material 1 to which the cladding powder 12 is supplied can be offset by a predetermined distance d in the cladding advancement direction Z to rearward of the optical axis 11 a of the laser beam 11.

On the other hand, in the conventional technique, the annular supply tube for supplying cladding powder 112 is symmetrical to an optical axis 111a of a laser beam 111 as illustrated in FIG. 6.

FIGS. 3A and 3B illustrate an A-A cross section and a B-B cross section of FIG. 2. In the transverse section orthogonal to the optical axis 11a of the laser beam 11, as illustrated in FIGS. 3A and 3B, the center of the outline of the annular supply tube 14 does not align with the optical axis 11a of the laser beam 11.

On the other hand, in the conventional technique, as would be seen when a transverse cross section is created from the longitudinal cross section in FIG. 6, the center of the outline of the annular supply tube for supplying the cladding powder 112 aligns with the optical axis 111a of the laser beam 111. That is, the outline of the annular supply tube for supplying the cladding powder 112 illustrated in FIG. 6 constitutes a concentric circle around the optical axis 111a of the laser beam 111, which is clearly distinguished from the present embodiment illustrated in FIGS. 3A and 3B.

As illustrated in FIG. 2, the axis passing through the supply center position 12a of the cladding powder 12 in parallel to the optical axis 11a will be called supply axis 12b of the cladding powder 12. The distance between the optical axis 11a and the supply axis 12b constitutes an offset amount d. In the present embodiment, the annular supply tube 14 is formed around the optical axis 11a while the optical axis 11a and the supply axis 12b of the cladding powder 12 are made eccentric to each other. However, the supply unit P of the cladding powder 12 is not limited to this. For example, as illustrated in FIG. 1, the supply unit P of the cladding powder 12 may be formed to supply the cladding powder 12 from the side of the optical axis 11a of the laser beam 11.

An inactive shield gas 15 such as argon and helium can be flown from the laser processing head 10 around the irradiation point on the optical axis 11a of the base material 1 and the supply center position 12a of the cladding powder 12.

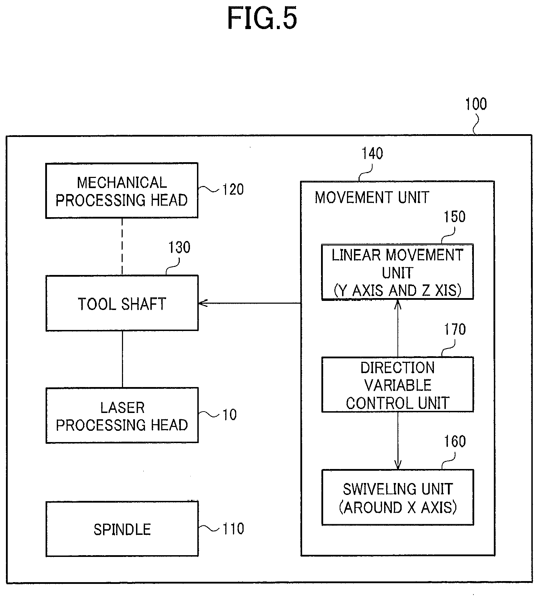

FIG. 5 is a block diagram of a complex machine tool 100 including the laser cladding device. The complex machine tool 100 has a spindle 110 that is rotatably controlled to chuck and hold a workpiece such as the base material 1. However, during laser processing of a base material 1, the spindle 110 is not rotated. As processing heads for processing the workpiece held by the spindle 110, a mechanical processing head 120 and the laser processing head 10 described above are arranged. The laser processing head 10 and the mechanical processing head 120 are selectively attached to a tool shaft 130 via a tool change device, for example. The tool shaft 130 is moved by a movement unit 140. The movement unit 140 may include a linear movement unit 150 that moves the laser processing head 10 linearly via the tool shaft 130 along the Y axis and the X axis illustrated in FIG. 2, for example. The movement unit 140 can also include a swiveling unit 160 that swivels the laser processing head 10 via the tool shaft 130 around the X axis illustrated in FIG. 2, for example. The movement unit 140 can also include a direction variable control unit 170 that changes the movement direction of the laser processing head 10 between the Z-axis direction and the Y-axis direction and outputs a swiveling instruction to the swiveling unit 160 according to the direction change.

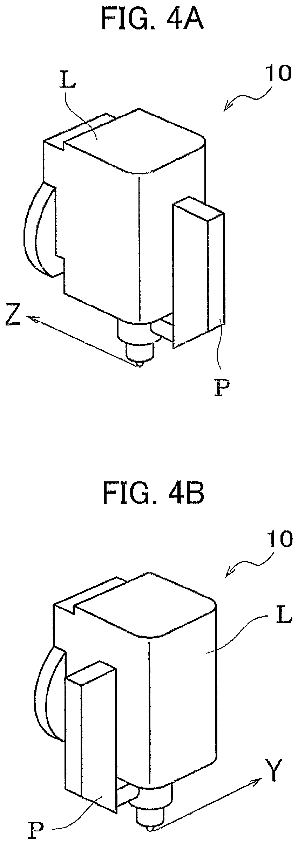

In the present embodiment, as illustrated in FIG. 4A, the laser processing head 10 can be linearly moved via the tool shaft 130 along the Z axis illustrated in FIG. 4A to perform the laser cladding method illustrated in FIG. 1 or 2 in the Z direction as the cladding advancement direction. When the direction variable control unit 170 outputs a direction change instruction to the linear movement unit 150, as illustrated in FIG. 4A, the laser processing head 10 can be linearly moved via the tool shaft 130 along the Y axis illustrated in FIG. 4B to perform the laser cladding method illustrated in FIG. 1 or 2. At this time, the direction variable control unit 170 also inputs the direction change instruction into the swiveling unit 160. Accordingly, the tool shaft 130 is swiveled 90° around the X axis to change the posture of the laser processing head 10 illustrated in FIG. 4A to the posture illustrated in FIG. 4B. Accordingly, as illustrated in FIG. 4B, the supply unit P of the cladding powder 12 is arranged behind the laser processing head 10 also in the advancement direction Y of the laser processing head 10. Therefore, the laser processing head 10 can be linearly moved along the Y axis illustrated in FIG. 4B to perform the laser cladding method illustrated in FIG. 1 or 2 in the Y direction as the cladding advancement direction.

Although only some embodiments of the present invention have been described in detail above, those skilled in the art will readily appreciate that many modifications are possible in the embodiments without materially departing from the novel teachings and advantages of this invention. Accordingly, all such modifications are intended to be included within scope of this invention.

For example, an offset variable control unit can be provided to change an offset amount d between the optical axis 11a and the supply center position 12a of the cladding powder 12. This is because the offset amount d is preferably adjustable according to the cladding speed, the spot diameter and intensity of a laser beam, and the like. The offset variable control unit can switch the nozzle to be used when the supply unit P of the cladding powder 12 has a plurality of nozzles different in ejection angle. Alternatively, the offset variable control unit may change the orientation of the powder ejection tube as the supply unit P of the cladding powder 12.

## Claims

1. A laser cladding device for cladding a surface of a base material along a cladding advancement direction, comprising:
an irradiation unit configured to irradiate the base material with a laser beam;
a supply unit configured to supply cladding powder to the base material; and
a movement unit configured to move the irradiation unit and the supply unit relative to the base material,
**characterized in that**
a supply center position on the base material to which the supply unit supplies the cladding powder is offset by a predetermined distance to rearward of an optical axis of the laser beam in the cladding advancement direction.

2. The laser cladding device as defined in claim 1, further comprising a processing head equipped with the irradiation unit and the supply unit,
wherein the supply unit arranged in the processing head includes an annular supply tube that is provided annularly around the optical axis of the laser beam to supply the cladding powder, and
wherein the annular supply tube is asymmetrical to the optical axis of the laser beam in a longitudinal cross section parallel to the optical axis of the laser beam.

3. The laser cladding device as defined in claim 1, further comprising a processing head equipped with the irradiation unit and the supply unit,
wherein the supply unit arranged in the processing head includes an annular supply tube that is provided annularly around the optical axis of the laser beam to supply the cladding powder, and
wherein a center of outline of the annular supply tube does not align with the optical axis of the laser beam in a transverse cross section orthogonal to the optical axis of the laser beam.

4. The laser cladding device as defined in claim 1, further comprising a processing head equipped with the irradiation unit and the supply unit,
wherein the movement unit moves the processing head with respect to the base material, and
wherein the movement unit further includes:
a direction variable control unit configured to control variably the cladding advancement direction by changing a movement direction of the processing head; and
a swiveling unit configured to swivel the processing head around a perpendicular line to the surface of the base material in accordance with the cladding advancement direction.

5. The laser cladding device as defined in claim 1 or 4, further comprising an offset variable control unit configured to change the offset amount.

6. A complex machine tool comprising the laser cladding device as defined in any one of claims 1 to 5.
